# EUROPÄISCHE PATENTSCHRIFT

(11) **EP 3 353 241 B1**
(45) Veröffentlichungstag und Bekanntmachung des Hinweises auf die Patenterteilung: **24.02.2021**
(21) Anmeldenummer: 16770920.3
(22) Anmeldetag: 22.09.2016
(51) Int. Cl.: C08L 63/00, B32B 7/12, H01F 3/02, H02K 1/04, C09J 163/00

(54) **THERMISCH AKTIVIERBARE, SCHNELLHÄRTENDE KLEBSTOFFBESCHICHTUNG**
THERMALLY ACTIVATABLE, FAST-CURING ADHESIVE COATING
REVÊTEMENT ADHÉSIF THERMOACTIVABLE À DURCISSEMENT RAPIDE

(30) Priorität: 23.09.2015 DE 102015012172
(43) Veröffentlichungstag der Anmeldung: 01.08.2018
(73) Patentinhaber: Universität Kassel, 34109 Kassel (DE)
(72) Erfinder: THIEDE, Holger, 34125 Kassel (DE); BÖHM, Stefan, 34125 Kassel (DE)
(74) Vertreter: Godemeyer Blum Lenze Patentanwälte Partnerschaft mbB - werkpatent
(86) Internationale Anmeldenummer: PCT/EP2016/072532
(87) Internationale Veröffentlichungsnummer: WO 2017/050892

(56) Entgegenhaltungen:
- EP-A1- 2 468 834

## Beschreibung

Die vorliegende Erfindung betrifft eine thermisch aktivierbare Klebstoffzusammensetzung zur Verwendung in einem Verfahren zur Herstellung eines Blechpakets aus miteinander verklebten Blechbauteilen, die Verwendung der Klebstoffzusammensetzung in einem Verfahren zur Herstellung eines Blechpakets aus miteinander verklebten Blechbauteilen, das Verfahren zur Herstellung eines Blechpakets aus miteinander verklebten Blechbauteilen, ein Blechbauteil beschichtet mit der Klebstoffzusammensetzung sowie ein Stator-oder Rotor-Paket enthaltend ein oder mehrere solcher Blechbauteile.

Die Effizienz eines Elektromotors wird durch mehrere seiner Komponenten beeinflusst, die als Gesamtkonzept die Umwandlung elektrischer in kinetische Energie ermöglichen. Zu diesen Komponenten gehören Lamellenpakete, durch welche die Leistungsübertragung erfolgt. Die Lamellenpakete werden beispielsweise als Teile der Statoren und/oder Rotoren von Elektromotoren eingesetzt. Lamellenpakete sind aus vielen sehr dünnen Elektroblechen hergestellt. Elektrobleche weisen hervorragende Eigenschaften bei der Leitung und Verstärkung von Magnetfeldern auf. Die einzelnen Blechlamellen sind gegeneinander isoliert und beeinflussen entscheidend die Effizienz des Elektromotors. Hierbei sind die Zusammensetzung und Spannungsfreiheit der Bleche, der Wert ihres elektrischen Widerstands und die Unversehrtheit der Isolation bedeutende Einflussfaktoren. Diese Einflussfaktoren werden wesentlich von dem Verfahren, insbesondere der flächigen oder punktuellen Bindung der Bleche untereinander, und der Bearbeitungsqualität, beispielsweise dem Stanzgrat, bestimmt.

Unter dem Begriff Paketierung versteht man im Elektromaschinenbau das Fügen einzelner Bleche, sogenannter Blechlamellen oder kurz Lamellen, zu einem Paket. Ein Paket ist ein geordneter Stapel vieler Bleche, die zueinander unverschieblich verbunden sind. Ein derartiges Blechpaket ersetzt den massiven Eisenkern. Die Verbindung der Bleche zu dem Paket wird beispielsweise durch Verschrauben oder mittels außen an dem Paket angelegten Klammern erreicht. Derartige Verbindungen erlauben ein Lösen der Verbindung, jedoch wird die Leistungsfähigkeit der Elektromaschine durch derartige Verbindungsmittel in der Regel negativ beeinflusst, beispielsweise durch einen elektrischen Kurzschluss im Bereich der Verbindungsmittel oder ein gestörtes Magnetfeld.

Ein weiteres bekanntes Verbindungsverfahren ist das Schweißen. Dabei werden die Bleche thermisch und stoffschlüssig verbunden. Dabei werden die gestanzten und gestapelten Lamellen in eine Vorrichtung gespannt und am Außenradius durch mehrere, orthogonal zur Lamellenebene orientierte Schweißnähte gefügt. Jedoch beschädigt das Schweißen die Lamellen und deren Isolationsschicht und kann zu erhöhten Wirbelstromverlusten führen oder das Magnetfeld beeinflussen. Zwar wird die Konstruktionsfreiheit durch die Schweißnaht kaum eingeschränkt, ein derart hergestelltes Paket kann aber zerstörungsfrei nicht mehr zerlegt werden.

Als einstufiges Verfahren ist das sogenannte Stanzpaketieren bekannt. Bei dem Stanzpaketieren wird das Elektroblech in einem Maschinenhub aus dem Rohmaterial ausgestanzt, auf dem Stapel abgelegt und mit dem Stapel verbunden. Beim Stanzen und/oder beim Ablegen bzw. beim Fixieren werden in dem Elektroblech mechanische Verbindungen erzeugt, die mit den Verbindungen der benachbarten Elektrobleche zusammenwirken. Diese Verbindungen sind Erhöhungen, auch Nocken oder Noppen genannt, welche in das Elektroblech geprägt werden. Da die Isolationsbeschichtung im Bereich der Umformung beschädigt werden kann, sind Kurzschlüsse nicht auszuschließen. Darüber hinaus ist die Verbindung konstruktiv einschränkend und beeinflusst aufgrund des lokalen Verbindungsmittels das Magnetfeld.

Weiterhin ist der Einsatz von Klebstoffen als Verbindungsmittel bekannt. Eine Form des Verklebens ist der Einsatz sogenannter Backlacke, wie sie beispielsweise in DE 35 03 019 C2 und DE 38 29 068 C1 beschrieben werden. Mit einem Backlack wird in der Regel das Rohmaterial, ein quasi endloses Blechband, beschichtet. Nach dem Trennen der einzelnen Lamellen aus dem mit Backlack beschichteten Blechband werden diese zueinander ausgerichtet, aufeinander abgelegt und bilden so einen Stapel. Dieser Stapel noch unverbundener Bleche wird anschließend über einen bestimmten Zeitraum, zumeist 30 bis 150 Minuten, auf eine Reaktionstemperatur des Backlacks erhitzt. Die Reaktionstemperatur beträgt in der Regel 150°C bis 250°C. Während der Wärmeeinwirkung wird der Stapel durch eine Spannvorrichtung mit einem Druck von 2 bis 6 Newton pro Quadratmillimeter beaufschlagt. Anschließend folgt eine bis zu 60 Minuten dauernde Abkühlphase. Zwar wird durch den Einsatz von Backlack eine vollflächige und beständige Verbindung der einzelnen Lamellen ohne eine Beschädigung der Metallstruktur oder der Isolationsschicht erreicht, jedoch sind der Back- und Abkühlvorgang sehr zeitintensiv und daher nur schwer in eine kontinuierliche Massenproduktion zu integrieren.

Die EP2468834 A1 beschreibt eine wärmehärtende Versiegelungszusammensezung umfassend ein Epoxidharz, ein wärmeaktivierbares Härtungsmittel oder einen Beschleuniger, ein Polyurethanpolymer; und mindestens ein Polyaldimin.

Der Erfindung liegt die Aufgabe zugrunde, das Verfahren zur Herstellung von Blechpaketen so zu verbessern, dass eine Serienfertigung in hoher Stückzahl bei kurzen Taktzeiten möglich ist.

Gelöst wird diese Aufgabe in einem ersten Aspekt durch eine
- thermisch aktivierbare Klebstoffzusammensetzung, enthaltend: eine wässrige Dispersion enthaltend 100 Gewichtsteile eines Epoxidharzes;
- 4 bis 8 Gewichtsteile eines latenten Härters; und
- 4 bis 10 Gewichtsteile eines latenten Beschleunigers
sowie deren Verwendung in einem Verfahren zur Herstellung eines Blechpakets aus miteinander verklebten Blechbauteilen.

Unter einem "latenten Härter" wird dabei ein zur Härtung des Epoxidharzes dienender Stoff verstanden, der jedoch erst durch Zufuhr von chemischer oder thermischer Energie aktiviert werden muss.

Dementsprechend wir unter einem "latenten Beschleuniger" ein zur Beschleunigung der Härtung des Epoxidharzes durch den Härter dienender Stoff verstanden, der ebenfalls erst durch Zufuhr von chemischer oder thermischer Energie aktiviert werden muss.

Wesentlich ist, dass der Klebstoff ein thermisch aktivierbarer Klebstoff ist. Dieser wird erst nach dem Verbinden (Fügen) der Blechbauteile endgültig ausgehärtet, kann aber über die verschiedenen Stufen der Verarbeitung aktiviert und damit in einen klebrigen Zustand gebracht werden. Es ist somit eine zeitliche und/oder räumliche Trennung der Einzelfunktionen gegeben. Die Applikation des Klebstoffs auf einem der beiden Bauteile erfolgt in einem ersten Verfahrensschritt. Danach wird der Klebstoff getrocknet und erstarrt, so dass er keine klebrige Oberfläche mehr besitzt.

Die erfindungsgemäße Klebstoffzusammensetzung ermöglicht eine extrem kurze Aktivierungszeit von beispielsweise 0,5 - 1 Sekunde und eine extrem kurze Aushärtungszeit von beispielsweise maximal 5 Sekunden. Darüber hinaus ist die erfindungsgemäße Klebstoffzusammensetzung durch eine hohe Temperaturbeständigkeit, von beispielsweise 190°C, sowie eine hohe Isolations- und Alterungsfähigkeit gekennzeichnet.

Die erfindungsgemäße Klebstoffzusammensetzung ist ein Mehrkomponentenklebstoff, der insbesondere eine Epoxidharz-Komponente, einen Härter und einen Beschleuniger enthält.

Die erste Komponente bilden ein oder mehrere Epoxidharze mit mehr als einer Epoxidgruppe, von denen vorzugsweise mindestens ein Epoxidharz einen Erweichungspunkt > 50°C besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

In einer bevorzugten Ausgestaltung der vorliegenden Erfindung ist das Epoxidharz eine wässrige Dispersion von Bisphenol A-Epoxidharz.

Die zweite Komponente bilden ein oder mehrere der Härtung des Epoxidharzes dienende Substanzen, die vorzugsweise bei Temperaturen im Bereich von 80°C bis 200°C mit den Epoxidharzen der Klebstoffzusammensetzung Härtungsreaktionen eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF₃-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazolium-trimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2"-methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure-Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

In einer bevorzugten Ausgestaltung der vorliegenden Erfindung enthält der Härter ein Dicyandiamid, einen BF₃-Aminkomplex oder eine Kombination derselben.

Die dritte Komponente bilden ein oder mehrere Beschleuniger, die die Reaktion zwischen Epoxidharz und Härter beschleunigen.

In einer bevorzugten Ausgestaltung der vorliegenden Erfindung enthält der Beschleuniger ein Harnstoffderivat und/oder ein Imidazol.

Die erfindungsgemäße Klebstoffzusammensetzung kann darüber hinaus noch weitere Komponenten enthalten.

In einer bevorzugten Ausgestaltung enthält die erfindungsgemäße Klebstoffzusammensetzung 2 bis 12 Gewichtsteile eines oder mehrerer Korrosionsschutzadditive ausgewählt aus der Gruppe bestehend aus Zink-Aluminium-Molybdatphosphaten und Strontium-Aluminium-Polyphosphaten.

Weitere erfindungsgemäß verwendbare Korrosionsschutzadditive sind Zinkphosphate, Aluminiumphosphate, Zink-Aluminium-Orthophosphate, Zink-Molybdat-Orthophosphate, Calciumhydrogenphosphate, Zink-Strontium-Phosphatsilikate, Zink-Aluminium-Polyphosphate, Calcium-Aluminium-Polyphosphate, Zink-Calcium-Strontium-Aluminiumphosphatsilikate, Oxiaminophosphatsalze, Zinksalze oder Eisenglimmer.

In einer weiteren bevorzugten Ausgestaltung enthält die erfindungsgemäße Klebstoffzusammensetzung 5 bis 15 Gewichtsteile eines oder mehrerer Isolationsadditive ausgewählt aus der Gruppe bestehend aus Kaolin und Glimmer.

Unter einem Isolationsadditiv wird erfindungsgemäß ein Stoff verstanden, der elektrisch isolierend wirkt.

In einer weiteren bevorzugten Ausgestaltung enthält die erfindungsgemäße Klebstoffzusammensetzung 0,2 bis 8 Gewichtsteile Absorptionsadditive ausgewählt aus der Gruppe bestehend aus Rußen und Eisenoxiden.

Unter einem Absorptionsadditiv wird erfindungsgemäß ein Stoff verstanden, der Wärmestrahlung absorbiert.

In einer weiteren bevorzugten Ausgestaltung enthält die erfindungsgemäße Klebstoffzusammensetzung einen oder mehrere Zusatzstoffe ausgewählt aus der Gruppe bestehend aus Füllstoffen, Dispergierhilfsmitteln und Filmbildehilfsmitteln.

Beispiele für Dispergierhilfsmittel sind Tenside, Polyanionen und Phosphate.

Beispiele für Filmbildehilfsmittel sind Ester, Etheralkohole und Glykole.

Die Klebstoffkomponenten sind bevorzugt so ausgewählt, dass bei der Mischung Temperaturen im Bereich von 20-30°C gewählt werden können, ohne dass es zu einer Aushärtung des Klebstoffes durch den Mischprozess kommt. Der applizierte Klebstoff ist bei Raumtemperatur mehrere Monate lagerstabil und kann später durch eine Erwärmung auf Temperaturen von über 100°C, beispielsweise 150°C oder 180°C, innerhalb kürzester Zeit ausgehärtet werden.

Werden der Klebstoffzusammensetzung keine Lösungs- oder Dispergiermittel zugesetzt, kann die Klebstoffzusammensetzung beispielsweise als sogenannter "Reaktiver Schmelzklebstoff" appliziert werden. Ein Schmelzklebstoff muss vor der Applikation auf seine Schmelztemperatur erwärmt werden, damit er verflüssigt wird. Schmelztemperaturen von reaktiven Schmelzklebstoffen liegen typischerweise im Bereich von 60°C bis 100°C. Die Reaktion erfolgt dann bei Temperaturen im Bereich von 150°C-180°C.

Eine besonders bevorzugte Klebstoffvariante beruht auf wässrigen Epoxidharzdispersionen. Diese enthalten im Wesentlichen mindestens die bereits vorbenannten Stoffe, also 100 Gewichtsteile eines Epoxidharzes; 4 bis 8 Gewichtsteile eines latenten Härters; und 4 bis 10 Gewichtsteile eines latenten Beschleunigers.

Die wässrige Dispersion wird gegebenenfalls mit Wasser soweit verdünnt, dass sie durch Sprühen, Streichen und andere bekannte Auftragsverfahren in der gewünschten Schichtdicke auf das vorzubeschichtende Blech aufgetragen werden kann. Nach der Applikation wird das Wasser verdampft, so dass vorzugsweise eine bei 20°C trockene und klebfreie Klebstoffschicht zurückbleibt, welche thermisch aktivierbar ist.

Selbstverständlich können alle genannten Komponenten auch in organischen Lösemitteln gelöst zur Verfügung gestellt werden. Diese Variante ist aber nicht bevorzugt, da die Anwendung von organischen Lösemitteln aus ökologischen Gründen reduziert werden sollte und zudem die miteinander reagierenden Komponenten gelöst vorliegen und damit bereits in der Zubereitung miteinander reagieren können. In wässriger Dispersion liegen die Komponenten hingegen separiert voneinander als dispergierte Teilchen vor, was eine besonders gute Lagerstabilität der Zubereitung zur Folge hat.

Alternativ können die Klebstoffmischungen auch als Pulver zur Verfügung gestellt werden. Diese Pulver werden mit den nach dem Stand der Technik bekannten Verfahren zur Applikation von Pulverlacken auf das Blech aufgesintert. Die gebildete Schicht wird wiederum thermisch aktiviert, nachdem der Verbund mit einem weiteren Blech hergestellt wurde.

Nachdem das Blech mit der thermisch aktivierbaren Klebstoffzusammensetzung bzw. dem vorzugsweise bei 20°C klebefreien ("tackfreien") Klebstoff vorbeschichtet wurde, wird in einem zeitlich und/oder räumlich nachfolgenden Prozessschritt das Bauteil, welches mit einer derartigen Klebeschicht versehen ist, auf einer Gegenklebefläche des anderen Bauteils gefügt. Mindestens eines der Bleche ist mit der Klebstoffschicht vorbeschichtet, und es werden mindestens zwei Bleche gefügt.

Die Aushärtung des Klebstoffs erfolgt vor, während und/oder nach dem Fügen durch Erwärmen der Klebeschicht auf eine Temperatur, die für die notwendige chemische Reaktion zwischen Epoxidharz, Härter und Beschleuniger ausreichend hoch ist.

Durch die extrem kurze Aktivierungs- und Aushärtungszeit der erfindungsgemäßen Klebstoffzusammensetzung ist es möglich, den Klebstoff bereits vor dem Fügen des Blechpakets zu aktivieren, so dass er bereits während des Fügens anfängt auszuhärten. Dies spart Zeit und ermöglicht somit die Herstellung von Blechpaketen mit hohen Taktzahlen.

Dementsprechend betrifft die vorliegende Erfindung auch ein Verfahren zur Herstellung eines Blechpakets aus miteinander verklebten Blechbauteilen, wobei zumindest zwei Blechbauteile unter Zwischenlage einer Klebstoffschicht zu einem Verbundkörper gefügt werden, dadurch gekennzeichnet, dass als Klebstoff eine hier beschriebene Klebstoffzusammensetzung verwendet wird, die vor oder während des Fügens thermisch aktiviert wird.

Erfindungsgemäß ist also ein Verfahren zur Herstellung eines aus mehreren aufeinander gestapelten Blechen erzeugten Blechpakets vorgesehen, bei dem die Elektrobleche unmittelbar vor dem Stapeln oder beim Stapeln ausgestanzt werden können. Durch die Verwendung eines Rohmaterials, welches zumindest einseitig mit einer Beschichtung versehen ist, die einen erfindungsgemäßen Klebstoff enthält, und das in einem Arbeitsgang mögliche Ausstanzen, Stapeln und Fügen können Blechpakete bei kurzen Taktzeiten und in hoher Stückzahl in Serie gefertigt werden.

In einer bevorzugten Ausgestaltung des erfindungsgemäßen Verfahrens wird eines der Blechbauteile vor dem Fügen zum Verbundkörper mit der Klebstoffzusammensetzung beschichtet, die vor dem Fügen zum Verbundkörper erstarrt, jedoch nicht aushärtet, so dass die freie Oberfläche der Klebstoffschicht keine klebende Eigenschaft aufweist.

In einer weiteren bevorzugten Ausgestaltung des erfindungsgemäßen Verfahrens erfolgt die thermische Aktivierung mittels Infrarotstrahlung. Infrarotstrahlung ermöglicht die Verkürzung der Aktivierungszeit auf vorzugsweise unter 0,5 Sekunden, beispielsweise 0,3 Sekunden. Sie ist darüber hinaus kostengünstig und ohne hohen apparativen Aufwand und Energieaufwand einzusetzen.

Gegenstand der vorliegenden Erfindung ist auch ein Blechbauteil beschichtet mit einer zuvor beschriebenen Klebstoffzusammensetzung.

In einer bevorzugten Ausgestaltung der vorliegenden Erfindung ist das Blechbauteil ein Stahlblech.

Die nach dem hier beschriebenen erfindungsgemäßen Verfahren hergestellten Blechbauteile eignen sich insbesondere für den Einsatz in Stator- oder Rotor-Paketen.

Dementsprechend ist ein weiterer Gegenstand der vorliegenden Erfindung ein Stator- oder Rotor-Paket enthaltend ein oder mehrere der zuvor beschriebenen Blechbauteile.

Die vorliegende Erfindung wird anhand der nachfolgenden Beispiele näher beschrieben.

### Beispiele

Es wurden Versuche durchgeführt mit zwei erfindungsgemäßen Produkten (Beispiele 1 und 2) und zwei Vergleichsprodukten aus dem Stand der Technik (Voltatex 1175W von Axalta und Dispercoll U 8755 von Bayer Materials Science).

### Versuchsbedingungen:

Applikation des Klebstoffs auf ein Elektroblech, Blechdicke 0,3 mm
Schichtdicke nach Trocknungsprozess: 5-6 µm
Probengeometrie: 25 mm x 100 mm
Prüfung der Zugscherfestigkeit in Anlehnung an DIN EN 1465
Überlappungslänge: 12,5 mm
Fügen der Proben in der Heizpresse: 200 °C, 1 s (siehe Beispiel 1)
bzw. Fügen der Proben durch NIR-Bestrahlung (0,3 s) (siehe Beispiel 2)

| **Klebstoffbezeichnung:** | Backlack (Voltatex 1175W) | PU-Dispersion (Dispercoll U8755) | Beispiel 1 | Beispiel 2 |
|---|---|---|---|---|
| EpiRez 5108-W-60 (Bisphenol A-Epoxidharz) | - | - | 100 Teile | 100 Teile |
| Dyhard 100 SF (Dicayndiamid) | - | - | 6 Teile | 6 Teile |
| Dyhard URAcc57 (Harnstoffderivat) | - | - | 8 Teile | 8 Teile |
| Heucophos SAPP (Strontium Aluminium Polyphosphat Hydrat) | - | - | 8 Teile | 8 Teile |
| Kaolin | - | - | 15 Teile | 15 Teile |
| Eisenoxid | - | - | - | 2 Teile |

| Ergebnisse: | | | | |
|---|---|---|---|---|
| Fügeprozess | Heizpresse, 200°C, 1s | Heizpresse, 200°C, 1s | Heizpresse, 200°C, 1s | NIR-Strahlung, 0,3 s, Fügen bei RT |
| Zugscherfestigkeit | 0,5 MPa | 1,7 MPa | 6,1 MPa | 6,3 MPa |
| Zugscherfestigkeit bei 190°C | 0 MPa | 0 MPa | 2,1 MPa | 1,2 MPa |

Die experimentellen Daten belegen, dass eine erfindungsgemäße Klebstoffzusammensetzung zu einer Zugscherfestigkeit des erhaltenen Blechverbunds führt, die von Klebstoffzusammensetzungen des Standes der Technik bei gleicher Aktivierungszeit nicht erreicht werden.

## Patentansprüche

1. Thermisch aktivierbare Klebstoffzusammensetzung zur Verwendung in einem Verfahren zur Herstellung eines Blechpakets aus miteinander verklebten Blechbauteilen, enthaltend:
eine wässrige Dispersion enthaltend
- 100 Gewichtsteile eines Epoxidharzes;
- 4 bis 8 Gewichtsteile eines latenten Härters; und
- 4 bis 10 Gewichtsteile eines latenten Beschleunigers.

2. Klebstoffzusammensetzung nach Anspruch 1, weiterhin enthaltend:
- 2 bis 12 Gewichtsteile eines oder mehrerer Korrosionsschutzadditive ausgewählt aus der Gruppe bestehend aus Zink-Aluminium-Molybdatphosphaten und Strontium-Aluminium-Polyphosphaten.

3. Klebstoffzusammensetzung nach Anspruch 1 oder 2, weiterhin enthaltend:
- 5 bis 15 Gewichtsteile eines oder mehrerer Isolationsadditive ausgewählt aus der Gruppe bestehend aus Kaolin und Glimmer.

4. Klebstoffzusammensetzung nach einem der Ansprüche 1 bis 3, weiterhin enthaltend:
- 0,2 bis 8 Gewichtsteile Absorptionsadditive ausgewählt aus der Gruppe bestehend aus Rußen und Eisenoxiden.

5. Klebstoffzusammensetzung nach einem der Ansprüche 1 bis 4, weiterhin enthaltend einen oder mehrere Zusatzstoffe ausgewählt aus der Gruppe bestehend aus Füllstoffen, Dispergierhilfsmitteln und Filmbildehilfsmitteln.

6. Klebstoffzusammensetzung nach einem der Ansprüche 1 bis 5, **dadurch gekennzeichnet, dass** das Epoxidharz eine wässrige Dispersion von Bisphenol A-Epoxidharz ist.

7. Klebstoffzusammensetzung nach einem der Ansprüche 1 bis 6, **dadurch gekennzeichnet, dass** der latente Härter ein Dicyandiamid, einen BF₃-Aminkomplex oder eine Kombination derselben enthält.

8. Klebstoffzusammensetzung nach einem der Ansprüche 1 bis 7, **dadurch gekennzeichnet, dass** der latente Beschleuniger ein Harnstoffderivat und/oder ein Imidazol enthält.

9. Verwendung der Klebstoffzusammensetzung nach einem der Ansprüche 1 bis 8 in einem Verfahren zur Herstellung eines Blechpakets aus miteinander verklebten Blechbauteilen.

10. Verfahren zur Herstellung eines Blechpakets aus miteinander verklebten Blechbauteilen, wobei zumindest zwei Blechbauteile unter Zwischenlage einer Klebstoffschicht zu einem Verbundkörper gefügt werden, **dadurch gekennzeichnet, dass** als Klebstoff eine Klebstoffzusammensetzung nach einem der Ansprüche 1 bis 8 verwendet wird, die vor oder während des Fügens thermisch aktiviert wird.

11. Verfahren nach Anspruch 10, **dadurch gekennzeichnet, dass** die thermische Aktivierung mittels Infrarotstrahlung erfolgt.

12. Verfahren nach Anspruch 10 oder Anspruch 11, **dadurch gekennzeichnet, dass** eines der Blechbauteile vor dem Fügen zum Verbundkörper mit der Klebstoffzusammensetzung beschichtet wird.

13. Blechbauteil beschichtet mit einer Klebstoffzusammensetzung nach einem der Ansprüche 1 bis 8.

14. Blechbauteil nach Anspruch 13, **dadurch gekennzeichnet, dass** das Blechbauteil ein Stahlblech ist.

15. Stator- oder Rotor-Paket enthaltend ein oder mehrere Blechbauteile nach Anspruch 13 oder Anspruch 14,

## Claims

1. A thermally activated adhesive composition for use in a method for manufacturing a laminated core from sheet metal elements adhesively bonded to each other, containing:
an aqueous dispersion, containing
- 100 parts by weight of an epoxy resin;
- 4 to 8 parts by weight of a latent curing agent; and
- 4 to 10 parts by weight of a latent accelerator.

2. The adhesive composition according to claim 1, further containing:
- 2 to 12 parts by weight of one or more corrosion-inhibiting additives selected from the group consisting of zinc-aluminum molybdate-phosphates and strontium-aluminum polyphosphates.

3. The adhesive composition according to claim 1 or 2, further containing:
- 5 to 15 parts by weight of one or more insulation additives selected from the group consisting of kaolin and mica.

4. The adhesive composition according to any one of claims 1 to 3, further containing:
- 0.2 to 8 parts by weight of absorption additives selected from the group consisting of carbon blacks and iron oxides.

5. The adhesive composition according to any one of claims 1 to 4, further containing one or more additives selected from the group consisting of fillers, dispersion aids and film-forming aids.

6. The adhesive composition according to any one of claims 1 to 5, **characterized in that** the epoxy resin is an aqueous dispersion of a bisphenol A epoxy resin.

7. The adhesive composition according to any one of claims 1 to 6, **characterized in that** the latent curing agent contains a dicyanamide, a BF₃-amine complex or a combination thereof.

8. The adhesive composition according to any one of claims 1 to 7, **characterized in that** the latent accelerator contains a urea derivative and/or an imidazole.

9. A use of the adhesive composition according to any one of claims 1 to 8 in a method for manufacturing a laminated core from sheet metal elements adhesively bonded to each other.

10. A method for manufacturing a laminated core from sheet metal elements adhesively bonded to each other, wherein at least two sheet metal elements are assembled to form a composite body using an intermediate layer of an adhesive, **characterized in that** an adhesive composition according to any one of claims 1 to 8 is used as the adhesive that will be thermally activated before or during assembling.

11. The method according to claim 10, **characterized in that** the thermal activation is carried out by using infrared radiation.

12. The method according to claim 10 or claim 11, **characterized in that** one of the sheet metal elements is coated with the adhesive composition prior to assembling the composite body.

13. A sheet metal element, coated with an adhesive composition according to any one of claims 1 to 8.

14. The sheet metal element according to claim 13, **characterized in that** the sheet metal element is sheet metal made of steel.

15. A stator or rotor core, containing one or more sheet metal elements according to claim 13 or claim 14.

## Revendications

1. Composition d'adhésif thermoactivable pour utilisation dans un procédé de fabrication d'un noyau feuilleté composé d'éléments en tôle collés les uns aux autres, comprenant :
une dispersion aqueuse comprenant
- 100 parties en poids d'une résine époxy ;
- de 4 à 8 parties en poids d'un durcisseur latent ; et
- de 4 à 10 parties en poids d'un accélérateur latent.

2. Composition d'adhésif selon la revendication 1, comprenant en outre :
- de 2 à 12 parties en poids d'un ou plusieurs additifs anticorrosion choisis dans le groupe se composant de phosphates de zinc-aluminium-molybdate et de polyphosphates de strontium-aluminium.

3. Composition d'adhésif selon la revendication 1 ou 2, comprenant en outre :
- de 5 à 15 parties en poids d'un ou plusieurs additifs d'isolation choisi dans le groupe se composant de kaolin et de mica.

4. Composition d'adhésif selon l'une quelconque des revendications 1 à 3, comprenant en outre :
- de 0,2 à 8 parties en poids d'additifs d'absorption choisis dans le groupe se composant de noirs de carbone et d'oxydes de fer.

5. Composition d'adhésif selon l'une quelconque des revendications 1 à 4, comprenant en outre un ou plusieurs additifs choisis dans le groupe se composant de charges, d'agents dispersants et d'agents filmogènes.

6. Composition d'adhésif selon l'une quelconque des revendications 1 à 5, **caractérisée en ce que** la résine époxy est une dispersion aqueuse de la résine époxy de bisphénol A.

7. Composition d'adhésif selon l'une quelconque des revendications 1 à 6, **caractérisée en ce que** le durcisseur latent comprend un dicyandiamide, un complexe BF₃-amine ou une combinaison de ceux-ci.

8. Composition d'adhésif selon l'une quelconque des revendications 1 à 7, **caractérisée en ce que** l'accélérateur latent comprend un dérivé d'urée et/ou un imidazol.

9. Utilisation de la composition d'adhésif selon l'une quelconque des revendications 1 à 8 dans un procédé de fabrication d'un noyau feuilleté composé d'éléments en tôle collés les uns aux autres.

10. Procédé de fabrication d'un noyau feuilleté composé d'éléments en tôle collés les uns aux autres, au moins deux éléments en tôle avec interposition d'une couche d'adhésif étant ajoutés à un corps composite, **caractérisé en ce qu'**une composition d'adhésif est utilisée comme adhésif selon l'une quelconque des revendications 1 à 8, qui est activé thermiquement avant ou pendant l'ajout.

11. Procédé selon la revendication 10, **caractérisé en ce que** l'activation thermique s'effectue au moyen d'un rayonnement infrarouge.

12. Procédé selon la revendication 10 ou la revendication 11, **caractérisé en ce qu'**un des éléments en tôle est revêtu de la composition d'adhésif avant l'ajout au corps de composite.

13. Elément en tôle revêtu d'une composition d'adhésif selon l'une quelconque des revendications 1 à 8.

14. Elément en tôle selon la revendication 13, **caractérisé en ce que** l'élément en tôle est une tôle d'acier.

15. Paquet de tôles statoriques ou rotoriques comprenant un ou plusieurs éléments en tôle selon la revendication 13 ou la revendication 14.
